# EUROPEAN PATENT APPLICATION

(11) **EP 3 021 609 A1**
(43) Date of publication of application: **18.05.2016**
(21) Application number: 14823246.5
(22) Date of filing: 19.06.2014
(51) Int. Cl.: H04W 24/02

(54) **NETWORK TESTING METHOD AND DATA COLLECTION METHOD THEREOF, AND NETWORK TESTING APPARATUS AND SYSTEM**

(30) Priority: 09.07.2013 CN 201310286904
(71) Applicant: ZTE Corporation, Shenzhen, Guangdong 518057 (CN)
(72) Inventor: HU, Peng, Shenzhen Guangdong 518057 (CN)
(74) Representative: Mozzi, Matteo
(86) International application number: PCT/CN2014/080353
(87) International publication number: WO 2015/003551

(57) **Abstract**

Provided are a network testing method, a data collection method for network testing, and a network testing apparatus and system. In a process of network testing, the network testing apparatus generates one or more corresponding data collection instructions according to a task, and sends the one or more data collection instructions to a network management system, and the network management system automatically collects corresponding data according to the one or more data collection instructions, and feeds back the collected data to the network testing apparatus for subsequent analysis and other processing. That is, one or more data collection instructions are sent to the network management system according to a specific task, and the network management system further automatically obtains the corresponding data without the need of manually collecting testing data, so that the cost of data collection can be reduced, and the efficiency of data collection can be improved. In addition, the process of data collection is no longer restricted by various external factors such as a skill of personnel, weather, a geographical environment, a traffic condition and public security, so that the stability of data collection can be ensured, thereby further ensuring the accuracy of subsequent network testing.

## Description

### Technical Field

The present disclosure relates to the field of communications, and in particular to a network testing method, a data collection method for network testing, and a network testing apparatus and system.

### Background

In construction, operation and maintenance processes of a wireless network, testing of users and network elements and analysis of problems are basic works of daily network maintenance, and are mainly implemented in a manual field testing manner at present, namely a professional carries special equipment, collects testing data when moving in a driving or walking manner, plays back the collected data, and analyzes the data manually to find a network problem or a service quality problem. However, along with the increase of a manpower cost, an oil price and the like, a fixed cost for manual field testing becomes increasingly higher, while the efficiency of data collection through the manual field testing is still relatively low. In addition, the manual field testing is restricted by various external factors such as a skill of personnel, weather, a geographical environment, a traffic condition and public security, an implementation process and a collection effect may be reduced to different extents, and a network testing effect is poor accordingly.

### Summary

The embodiments of the present disclosure provide a network testing method, a data collection method for network testing, and a network testing apparatus and system, which are used to solve the technical problem of poor network testing analysis effect caused by high cost and low efficiency of manual data collection and poor data collection effect.

In order to solve the technical problem, according to an embodiment of the present disclosure, a data collection method for network testing is provided, which may include that: a network testing apparatus generates one or more corresponding data collection instructions according to a task, and sends the one or more data collection instructions to a network management system; and the network management system collects corresponding data according to the one or more data collection instructions, and feeds back the collected data to the network testing apparatus.

In one embodiment of the present disclosure, the step that the network management system collects the corresponding data according to the one or more data collection instructions may include that: the network management system generates one or more corresponding data collection operation instructions according to the one or more data collection instructions, and issues the one or more data collection operation instructions to one or more corresponding network elements; and the one or more network elements collect data according to the one or more data collection operation instructions, and feed back the collected data to the network management system.

In one embodiment of the present disclosure, the task may be a special analysis task, a monitoring task or a testing task.

In one embodiment of the present disclosure, the network management system may include a network management system of a wireless access network and/or a network management system of a mobile core network.

In order to solve the technical problem, according to another embodiment of the present disclosure, a network testing method is also provided, which may include that: a network testing apparatus generates one or more corresponding data collection instructions according to a task, and sends the one or more data collection instructions to a network management system; the network management system collects corresponding data according to the one or more data collection instructions, and feeds back the collected data to the network testing apparatus; and the network testing apparatus analyzes the data fed back by the network management system.

In one embodiment of the present disclosure, the step that the network testing apparatus analyzes the data fed back by the network management system may include that: the network testing apparatus summarizes the data fed back by the network management system and then divides the data into user identification data, control plane data and user plane data; the network testing apparatus reorganizes the divided data according to a user service process and time; and the network testing apparatus analyzes the reorganized data to judge whether there is a problem.

In one embodiment of the present disclosure, the step that the network testing apparatus analyzes the reorganized data to judge whether there is a problem may include that: the network testing apparatus selects one or more corresponding service quality indexes according to a service to which the data belong and a type of the service, obtains one or more values of the one or more service quality indexes by statistics, and judges, according to one or more values of the one or more service quality indexes and one or more threshold values of the one or more service quality indexes, whether there is a service quality problem in the service to which the data belong; and/or, the network testing apparatus analyzes at least one of an abnormal reason, an interaction signaling, a measurement report, resource consumption information and network element hardware information in a service process of the service to which the data belong to judge whether there is a network problem.

In one embodiment of the present disclosure, after the network testing apparatus analyzes the reorganized data to determine that there is a problem, the method may further include that: the network testing apparatus determines a specific type of the problem according to a pre-defined problem rule base.

In one embodiment of the present disclosure, after the specific type of the problem is determined, the method may further include that: the network testing apparatus stores the determined problem and a basis for analyzing the problem, and informs network operation and maintenance staff.

In order to solve the technical problem, according to still another embodiment of the present disclosure, a network testing apparatus is also provided, which may include a task setting component, a data processing component and a data analysis component, wherein the task setting component is configured to generate one or more corresponding data collection instructions according to a set task, and send the one or more data collection instructions to a network management system; the data processing component is configured to process data, which are collected by the network management system according to the one or more data collection instructions, and send the processed data to the data analysis component; and the data analysis component is configured to analyze the data received from the data processing component.

In one embodiment of the present disclosure, the data processing component may be configured to summarize the data sent to the data processing component by the network management system, divide the data into user identification data, control plane data and user plane data, and reorganize the divided data according to a user service process and time.

In one embodiment of the present disclosure, the data analysis component may be configured to select one or more corresponding service quality indexes according to a service to which the data belong and a type of the service, obtain one or more values of the one or more service quality indexes by statistics, judge, according to one or more values of the one or more service quality indexes and one or more threshold values of the one or more service quality indexes, whether there is a service quality problem in the service to which the data belong, and/or analyze at least one of an abnormal reason, an interaction signaling, a measurement report, resource consumption information and network element hardware information in a service process of the service to which the data belong to judge whether there is a network problem.

In order to solve the problem, according to the embodiments of the present disclosure, a network testing system is also provided, which may include a network management system, one or more network elements in communication connection with the network management system, and the abovementioned network testing apparatus, wherein the network testing apparatus is in communication connection with the network management system.

The embodiments of the present disclosure have the beneficial effects that:

The embodiments of the present disclosure provide a network testing method and a data collection method for network testing, and a network testing apparatus and system. In a process of network testing, the network testing apparatus generates one or more corresponding data collection instructions according to a task, and sends the one or more data collection instructions to the network management system, and the network management system automatically collects the corresponding data according to the one or more data collection instructions, and feeds back the collected data to the network testing apparatus for subsequent automatic analysis and other processing. That is, according to the embodiments of the present disclosure, the one or more data collection instructions are sent to the network management system according to a specific task, and the network management system further automatically obtains the corresponding data without the need of manually collecting testing data, so the cost of data collection can be reduced, and the efficiency of data collection can be improved. In addition, the process of data collection is no longer restricted by various external factors such as a skill of personnel, weather, a geographical environment, a traffic condition and public security, so that the stability of data collection can be ensured, thereby further ensuring the accuracy of subsequent network testing.

### Brief Description of the Drawings

Fig. 1 is a flow diagram of collection of testing data provided in an embodiment 1 of the present disclosure;
Fig. 2 is a flow diagram of collection of data through a network management system provided in the embodiment 1 of the present disclosure;
Fig. 3 is a flow diagram of network testing provided in an embodiment 2 of the present disclosure;
Fig. 4 is a flow diagram of data analysis in Fig. 3;
Fig. 5 is a structural diagram of a network testing system provided in an embodiment 3 of the present disclosure;
Fig. 6 is a structural diagram of a network testing apparatus provided in the embodiment 3 of the present disclosure; and
Fig. 7 is a flow diagram of network testing provided in an embodiment 4 of the present disclosure.

### Detailed Description of the Embodiments

The present disclosure is further described below with reference to specific embodiments and the drawings in detail.

Testing of a network generally includes a process of collecting network testing data and a process of analyzing a problem based on the collected data, and may further include a process of locating the analyzed problem. In order to better understand the present disclosure, the abovementioned processes are described below with reference to some embodiments of the present disclosure respectively.

### Embodiment 1:

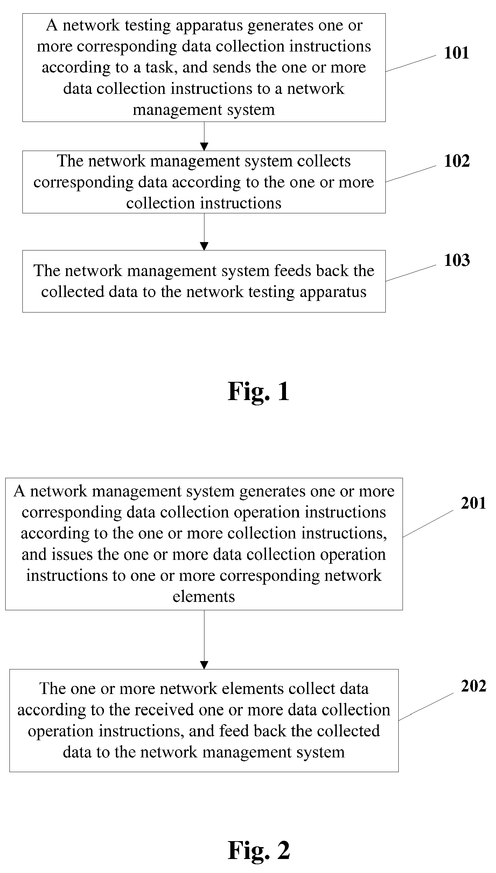

As shown in Fig. 1, in the embodiment of the present disclosure, in the process of network testing, the process of collecting the testing data is as follows:
Step 101: a network testing apparatus generates one or more corresponding data collection instructions according to a task, and sends the one or more data collection instructions to a network management system;
Step 102: the network management system collects corresponding data according to the one or more collection instructions; and
Step 103: the network management system feeds back the collected data to the network testing apparatus.

According to the abovementioned steps, the collection of the testing data in the embodiment of the present disclosure is completed by generating the corresponding collection instructions based on specific task requirements and automatically obtaining the corresponding data by the network management system according to the one or more data collection instructions, so that a person does not need to collect the data or know which data need to be collected, the automation degree of data collection is improved, the cost of data collection can be reduced, and the efficiency of data collection is improved. In addition, the process of data collection is no longer restricted by various external factors such as a skill of personnel, weather, a geographical environment, a traffic condition and public security, and the stability of data collection can be ensured, thereby further ensuring the accuracy of subsequent network testing.

In the embodiment, when the network testing apparatus generates the one or more corresponding data collection instructions according to the task in Step 101, corresponding time periods, objects, specific types and the like can be set for all different tasks such as testing tasks (for example, a signal strength testing task, a network performance testing task, an internet access speed testing task and so on), monitoring tasks (for example, a service quality monitoring task, a service success rate monitoring task, a service alarming monitoring task and so on) and special analysis tasks (for example, a time delay analysis task, an analysis task for QQ, Wechat or other services, a jitter analysis task, a packet loss analysis task and so on). In this way, data requirements of various tasks can be obtained through analysis for all the tasks, and the corresponding collection instructions can be generated. Moreover, in the embodiment, the data collection processes for different tasks may be separately performed, and subsequent problem analysis and problem location for different tasks can also be separately performed.

In the embodiment, the network management system may include a network management system of a wireless access network and/or a network management system of a mobile core network, and the specific network management system applied can be selected according to a specific application scene and a specific task type. When users or network elements involved in a current task are distributed in both a wireless network and a mobile network, the network management system of the wireless access network and/or the network management system of the mobile core network respectively collect/collects the corresponding data according to the corresponding collection instructions, and the data are summarized for subsequent problem analysis and the like. When the one or more network elements or the users involved in the current task are distributed in only one of the wireless network and the mobile network, the collection of the data can be completed correspondingly only by the network management system of the wireless access network or the network management system of the mobile core network. As shown in Fig. 2, the process of collecting the corresponding data by the network management system according to the one or more data collection instructions sent by the network testing apparatus includes that:
Step 201: the network management system generates one or more corresponding data collection operation instructions according to the one or more collection instructions, and issues the one or more data collection operation instructions to one or more corresponding network elements; and
Step 202: the one or more network elements collect data according to the received data collection operation instructions, and feed back the collected data to the network management system.

In the embodiment, the data collected by the network management system through the abovementioned process may include relevant data in the entire service process, for example, the data may include user identification data, user plane data, control plane data and the like. Compared with a conventional manual field testing mode, the embodiment has the advantages that the collected data are more complete, more accurate and more real (the data are collected in a simulated user service mode according to the field testing mode, and the data are collected in a real user service process according to the embodiment). The accuracy of subsequent problem analysis and location is improved more favorably.

### Embodiment 2:

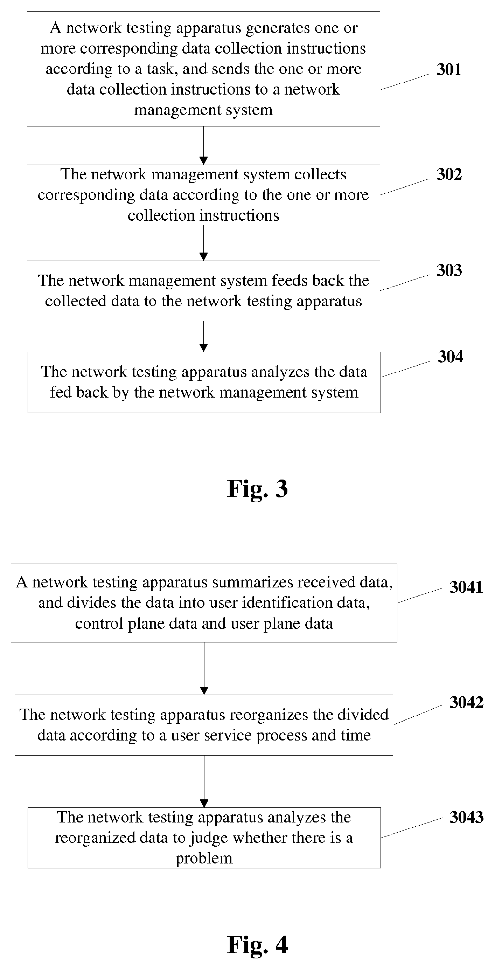

In the embodiment, a problem can be analyzed based on data collected through a data collection method described in the embodiment 1 in a process of analyzing a network testing problem. It should be noted that as long as the collected data include user identification data, user plane data, control plane data and the like, the data collection method applied is, certainly, not limited to the data collection method in the embodiment 1. The embodiment of the present disclosure is described below by taking a data collection result in the embodiment 1 as an example, and as shown in Fig. 3, the process includes that:
Step 301: a network testing apparatus generates one or more corresponding data collection instructions according to a task, and sends the one or more data collection instructions to a network management system;
Step 302: the network management system collects corresponding data according to the one or more collection instructions;
Step 303: the network management system feeds back the collected data to the network testing apparatus; and
Step 304: the network testing apparatus analyzes the data fed back by the network management system.

As shown in Fig. 4, in the embodiment, Step 304 that the network testing apparatus analyzes the data fed back by the network management system includes that:
Step 3041: the network testing apparatus summarizes the data fed back by the network management system and then divides the data into the user identification data, the control plane data and the user plane data;
Step 3042: the network testing apparatus reorganizes the divided data according to a user service process and time; and
Step 3043: the network testing apparatus analyzes the reorganized data to judge whether there is a problem, which includes: analyzing an interaction process of a service to which the data belong, and/or obtaining each service quality index of the service to which the data belong via statistics, and judging whether there are/is a network problem and/or a service quality problem in a user service process. In order to better understand the present disclosure, the embodiment of the present disclosure is further described below by taking a specific analysis process (namely a problem locating process) as an example.

In a process of analyzing the interaction process of the service to which the data belong to judge whether there is a network problem, whether there is a network problem may be determined specifically by analyzing at least one of an abnormal reason, an interaction signaling, a measurement report, network element resource consumption information, network element hardware information and the like in a service process of the service to which the data belong. For example, the network problem may be a coverage problem, an interference problem, a capacity problem, a system parameter setting problem and a hidden hardware failure problem.

In a process of obtaining each service quality index of the service to which the data belong via statistics to judge whether there is a service quality problem, one or more corresponding service quality indexes may be selected according to the service (for example, QQ, Wechat and MicroBlog) to which the data belong, and a type of the service (for example, instant messaging, videos and Voice over IP (VoIP)), one or more values of the one or more service quality indexes are obtained via statistics, and whether there is a service quality problem is judged according to the one or more obtained values of the one or more service quality indexes and one or more corresponding threshold values of the one or more service quality indexes. For example, the service quality problem may be a problem of service failure, a problem of low rate, a problem of high time delay and a problem of high packet loss.

In the embodiment, after the type of the problem is located in the problem locating process, the specific type of the problem may be further determined according to a pre-defined problem rule base, namely a specific reason of the problem is analyzed. For example, the specific type of the coverage problem may be determined as weak coverage, over-coverage, pilot pollution or poor uplink coverage according to signal strength, a distance between a service execution position and a serving cell and a coverage range of the serving cell.

In the embodiment, the determined problem and a basis for analyzing the problem may be further stored, and network operation and maintenance staff may be informed. Specially speaking, the network operation and maintenance staff may be informed in an alarming manner, he/she could check the problem, the specific type of the problem, a judgment basis and the like through a graphical interface, and could also play back the entire service process.

It can be seen that, in the process of analyzing the problem based on the data collected through the collection method in the embodiment, real user service process data are analyzed, service quality can be identified and can be obtained via statistics, and the entire service process can be played back by data division and reorganization to analyze whether there is a network problem. The actual quality and problem of user services can be more truly and more objectively reflected without the need of service simulation, fixed point dial testing and simulated service quality evaluation.

### Embodiment 3:

In order to better understand the present disclosure, the embodiment of the present disclosure is further described below by taking a complete testing system as an example.

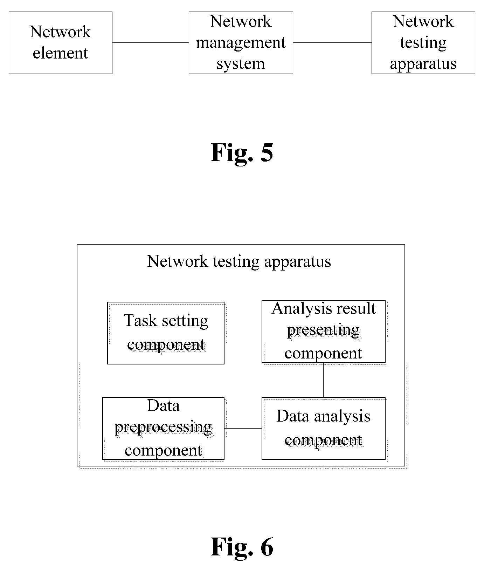

As shown in Fig. 5, a network testing system includes a network management system, one or more network elements in communication connection with the network management system and the network testing apparatus in the abovementioned embodiments, wherein the network testing apparatus is in communication connection with the network management system. It can be concluded, from the above analysis, that the network management system in the embodiment may also include a network management system of a wireless access network and/or a network management system of a mobile core network.

As shown in Fig. 6, the network testing apparatus in the embodiment may include a task setting component, a data processing component and a data analysis component, and may further include an analysis result presenting component, wherein
the task setting component is configured to provide a task setting interface which may be a graphical interface or the like, generate one or more corresponding data collection instructions according to a task set by a user, and send the one or more data collection instructions to the network management system;
the data processing component is configured to process data, which are collected by the network management system according to the one or more data collection instructions, and send the processed data to the data analysis component; and
the data analysis component is configured to analyze the data received from the data processing component.

In the embodiment, the data processing component may be configured to process the data, which are collected by the network management system according to the one or more data collection instructions, in a following manner:
the data processing component may be configured to summarize the data sent thereto by the network management system, divide the data into user identification data, control plane data and user plane data, and reorganize the divided data according to a user service process and time.

The data analysis component may be configured to analyze the reorganized data in the following manner:
the data analysis component may be configured to select one or more corresponding service quality indexes according to a service to which the data belong and a type of the service, obtain one or more values of the one or more service quality indexes by statistics, and judge, according to one or more values of the one or more service quality indexes and one or more threshold values of the one or more service quality indexes, whether there is a service quality problem in the service to which the data belong;
and/or,
the data analysis component may be configured to analyze at least one of an abnormal reason, an interaction signaling, a measurement report, resource consumption information and network element hardware information in a service process of the service to which the data belong to judge whether there is a network problem.

The data analysis component may also be configured to analyze a specific type of the problem according to the abovementioned mode, which is no longer repeated herein.

The analysis result presenting component in the embodiment may further store the determined problem and a basis for analyzing the problem, and inform network operation and maintenance staff. Specially speaking, the network operation and maintenance staff may be informed in an alarming manner, he/she may check the problem, the specific type of the problem, a judgment basis and the like through a graphical interface, and may also play back the entire service process.

### Embodiment 4:

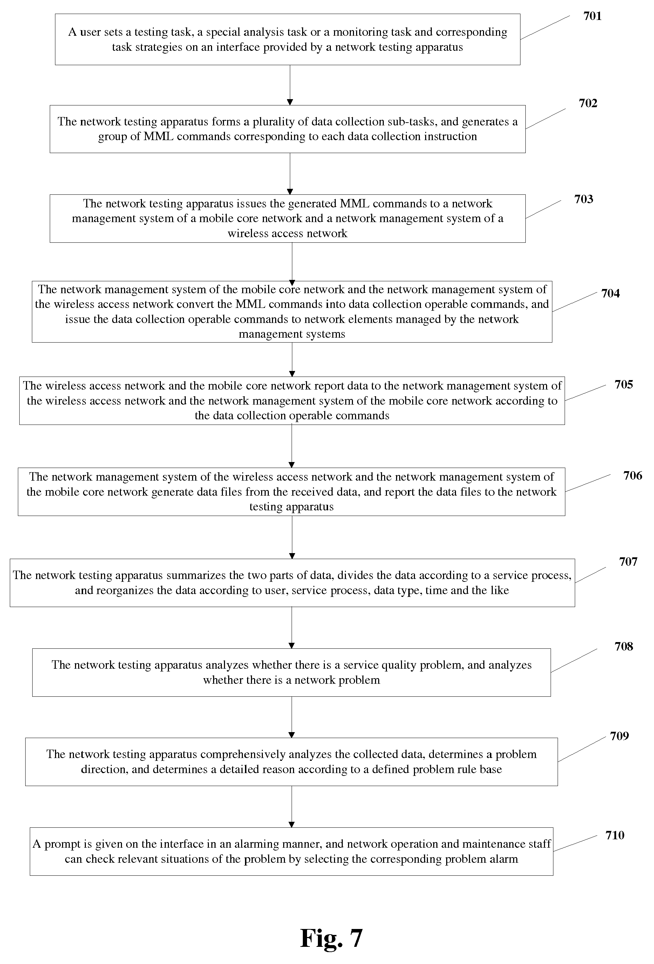

The embodiment of the present disclosure is further described below by taking an entire network testing process as an example; and as shown in Fig. 7, the entire network testing process may include steps 701 to 710 which are described as follows.

Step 701: a user sets a testing task, a special analysis task or a monitoring task and corresponding task strategies on an interface provided by a network testing apparatus.

Step 702: the network testing apparatus forms a plurality of data collection sub-tasks according to a task type, the task strategies and corresponding task objects, and generates a group of Man-Machine Language (MML) commands corresponding to each data collection instruction according to a northbound interface of a network management system.

Step 703: the network testing apparatus issues the generated MML commands to a network management system of a mobile core network and a network management system of a wireless access network through the northbound interface of the network management system.

Step 704: the network management system of the mobile core network and the network management system of the wireless access network convert the MML commands into data collection operable commands, and issue the data collection operable commands to one or more network elements managed by the network management systems.

Step 705: the wireless access network and the mobile core network report data to the network management system of the wireless access network and the network management system of the mobile core network according to the data collection operable commands.

Step 706: the network management system of the wireless access network and the network management system of the mobile core network generate data files according to the received data, and report the data files to the network testing apparatus.

Step 707: the network testing apparatus summarizes the two parts of data, extracts user plane data key information and control plane data key information, divides the data according to a service process, and reorganizes the data according to user, service process, data type, time and the like.

Step 708: the network testing apparatus selects appropriate indexes according to the identified service and service type, obtains the value of each service quality index by statistics, judges whether there is a service quality problem in the service process of the user according to the value of each service quality index actually obtained via statistics and the threshold value of the service quality index, and analyzes an abnormal reason, an interaction signaling, a measurement report and resource consumption in each service process to judge whether there is a network problem.

Step 709: the network testing apparatus comprehensively analyzes the collected data, determines a problem direction, and determines a detailed reason according to a defined problem rule base.

Step 710: a prompt is given on the interface in an alarming manner, and network operation and maintenance staff can check relevant situations of the problem by selecting the corresponding problem alarm.

Obviously, the collection of testing data in the embodiments of the present disclosure is completed by automatically obtaining the corresponding data by the network management system according to the one or more data collection instructions without the need of manual collection, the automation degree of data collection can be improved, the cost of data collection can be reduced, and the efficiency of data collection is improved. In addition, the process of data collection is no longer restricted by various external factors such as a skill of personnel, weather, a geographical environment, a traffic condition and public security, and the stability of data collection can be ensured, thereby further ensuring the accuracy of subsequent network testing.

Meanwhile, the data collected by the network management system may include relevant data in the entire service process, include user identification data, user plane data, control plane data and the like. Compared with a conventional manual field testing mode, the technical solution of the embodiments has the advantages that the collected data are more complete and more accurate, data volume is smaller than that obtained in the conventional manual field testing mode, the accuracy of subsequent problem analysis and location is improved more favorably, and resource consumption of network element equipment can be reduced.

In addition, in the process of analyzing the problem based on the data collected through the abovementioned collection method, real user service process data are analyzed, service quality can be identified and obtained via statistics, and the entire service process can be played back by data division and reorganization to analyze whether there is a network problem. The actual quality and problem of user services can be more truly and more objectively reflected without the need of service simulation, fixed point dial testing and simulated service quality evaluation.

The above content is a further detailed description to the embodiments of the present disclosure with reference to the specific implementation modes and is not intended to limit the specific embodiments of the present disclosure. Those skilled in the art can make various simple deductions or replacements without departing from the concept of the present disclosure, and these deductions and replacements shall also fall within the scope of protection defined in the appended claims of the present disclosure.

### Industrial Applicability

The technical solution provided by the embodiments of the present disclosure can be applied to a process of collecting network testing data. According to the adopted technical solution, in a process of network testing, a network testing apparatus generates one or more corresponding data collection instructions according to a task, and sends the one or more data collection instructions to a network management system, and the network management system automatically collects corresponding data according to the one or more data collection instructions, and feeds back the collected data to the network testing apparatus for subsequent automatic analysis and other processing. The cost of data collection can be reduced, and the efficiency of data collection can be improved. In addition, the process of data collection is no longer restricted by various external factors such as a skill of personnel, weather, a geographical environment, a traffic condition and public security, so that the stability of data collection can be ensured, thereby further ensuring the accuracy of subsequent network testing.

## Claims

1. A data collection method for network testing, comprising:
a network testing apparatus generating one or more corresponding data collection instructions according to a task, and sending the one or more data collection instructions to a network management system; and
the network management system collecting corresponding data according to the one or more data collection instructions, and feeding back the collected data to the network testing apparatus.

2. The data collection method for network testing as claimed in claim 1, wherein the network management system collecting the corresponding data according to the one or more data collection instructions comprises:
the network management system generating one or more corresponding data collection operation instructions according to the one or more data collection instructions, and issuing the one or more data collection operation instructions to one or more corresponding network elements; and
the one or more network elements collecting data according to the one or more data collection operation instructions, and feeding back the collected data to the network management system.

3. The data collection method for network testing as claimed in claim 1 or 2, wherein the task comprises a special analysis task, a monitoring task or a testing task.

4. The data collection method for network testing as claimed in claim 1 or 2, wherein the network management system comprises a network management system of a wireless access network and/or a network management system of a mobile core network.

5. A network testing method, comprising:
a network testing apparatus generating one or more corresponding data collection instructions according to a task, and sending the one or more data collection instructions to a network management system;
the network management system collecting corresponding data according to the one or more data collection instructions, and feeding back the collected data to the network testing apparatus; and
the network testing apparatus analyzing the data fed back by the network management system.

6. The network testing method as claimed in claim 5, wherein the network testing apparatus analyzing the data fed back by the network management system comprises:
the network testing apparatus summarizing the data fed back by the network management system, and then dividing the data into user identification data, control plane data and user plane data;
the network testing apparatus reorganizing the divided data according to a user service process and time; and
the network testing apparatus analyzing the reorganized data to judge whether there is a problem.

7. The network testing method as claimed in claim 6, wherein the network testing apparatus analyzing the reorganized data to judge whether there is a problem comprises:
selecting one or more corresponding service quality indexes according to a service to which the data belong and a type of the service, obtaining one or more values of the one or more service quality indexes by statistics, and judging, according to one or more values of the one or more service quality indexes and one or more threshold values of the one or more service quality indexes, whether there is a service quality problem in the service to which the data belong;
and/or,
analyzing at least one of an abnormal reason, an interaction signaling, a measurement report, resource consumption information and network element hardware information in a service process of the service to which the data belong to judge whether there is a network problem.

8. The network testing method as claimed in claim 7, wherein after the network testing apparatus analyzes the reorganized data to determine that there is a problem, the method further comprises:
determining a specific type of the problem according to a pre-defined problem rule base.

9. The network testing method as claimed in claim 8, wherein after the specific type of the problem is determined, the method further comprises: storing the determined problem and a basis for analyzing the problem, and informing network operation and maintenance staff.

10. A network testing apparatus, comprising a task setting component, a data processing component and a data analysis component, wherein
the task setting component is configured to generate one or more corresponding data collection instructions according to a set task, and send the one or more data collection instructions to a network management system;
the data processing component is configured to process data, which are collected by the network management system according to the one or more data collection instructions, and send the processed data to the data analysis component; and
the data analysis component is configured to analyze the data received from the data processing component.

11. The network testing apparatus as claimed in claim 10, wherein the data processing component is configured to summarize the data sent to the data processing component by the network management system, divide the data into user identification data, control plane data and user plane data, and reorganize the divided data according to a user service process and time.

12. The network testing apparatus as claimed in claim 11, wherein the data analysis component is configured to select one or more corresponding service quality indexes according to a service to which the data belong and a type of the service, obtain one or more values of the one or more service quality indexes by statistics, judge, according to one or more values of the one or more service quality indexes and one or more threshold values of the one or more service quality indexes, whether there is a service quality problem in the service to which the data belong, and/or analyze at least one of an abnormal reason, an interaction signaling, a measurement report, resource consumption information and network element hardware information in a service process of the service to which the data belong to judge whether there is a network problem.

13. A network testing system, comprising a network management system, one or more network elements in communication connection with the network management system, and the network testing apparatus as claimed in any one of claims 10 to 12, wherein the network testing apparatus is in communication connection with the network management system.
